# EUROPEAN PATENT APPLICATION

(11) **EP 4 215 066 A1**
(43) Date of publication of application: **26.07.2023**
(21) Application number: 22879580.3
(22) Date of filing: 17.11.2022
(51) Int. Cl.: A24D 1/02, A24C 5/58, D21H 27/00, A24D 1/20, C08L 1/00, C08K 5/00, C08J 5/18

(54) **TIP PAPER INCLUDING FLAVORING SHEET AND SMOKING ARTICLE INCLUDING SAME**

(30) Priority: 22.11.2021 KR 20210161513
(71) Applicant: KT & G Corporation, Daejeon 34337 (KR)
(72) Inventor: AHN, Ki-Jin, Daejeon 34128 (KR); KIM, Dong Hyun, Daejeon 34128 (KR); KIM, Ick Joong, Daejeon 34128 (KR); JUNG, Kyung Bin, Daejeon 34128 (KR); JEOUNG, Eun Mi, Daejeon 34128 (KR)
(74) Representative: Ter Meer Steinmeister & Partner
(86) International application number: PCT/KR2022/018151
(87) International publication number: WO 2023/090877

(57) **Abstract**

The present disclosure relates to tipping paper including a flavored sheet and a smoking article including the same, and more particularly, is to provide tipping paper for smoking articles and tipping paper including the same. The tipping paper, as tipping paper for smoking articles, includes a flavored sheet that includes a cellulose-based polymer, a plasticizer, and a flavoring material.

## Description

### Technical Field

The present disclosure relates to tipping paper including a flavored sheet, and a smoking article including the same.

### Background Art

To prevent a cigarette-type (traditional) tobacco product from being attached to a lip of a consumer during smoking, a surface of tipping base paper is coated with a hydrophobic material, or coated with sucralose (sweet taste) to enhance a tobacco taste.

Menthol may be added to meet consumer needs, but only an extremely small amount of menthol may be added in consideration of crystallization of menthol itself, and the like when menthol is applied to a product. This may impart a menthol flavor by coating a previously developed tipping paper material, or may promote imparting of a menthol taste by applying a method of flavoring flavored liquid to a tow using technology called a transfer jet nozzle system (TJNS) in manufacturing of a filter.

In the above-mentioned method, only a small amount of menthol may be added due to crystallization (e.g., a phenomenon in which menthol is hardened and whitened over time) of menthol when menthol-flavored liquid is added, and it is difficult to satisfy needs of customers who want a stronger menthol flavor.

### Disclosure of the Invention

### Technical Goals

To solve the above-mentioned problems, the present disclosure provides tipping paper for smoking articles to which a flavored sheet with a cooling effect and a flavor expression effect is applied.

The present disclosure provides a smoking article including tipping paper according to the present disclosure.

However, the technical goal obtainable from the present disclosure is not limited to the above-mentioned technical goal, and other unmentioned technical goals may be clearly understood from the following description by one of ordinary skill in the art to which the present disclosure pertains.

### Technical Solutions

According to an embodiment of the present disclosure, tipping paper for smoking articles is provided.

The tipping paper for smoking articles may include a flavored sheet that includes a cellulose-based polymer, a plasticizer, and a flavoring material.

According to an embodiment of the present disclosure, the cellulose-based polymer may be in an amount of 20% by weight (wt%) to 60 wt% in the flavored sheet.

According to an embodiment of the present disclosure, the plasticizer may be in an amount of 1 wt% to 20 wt% in the flavored sheet.

According to an embodiment of the present disclosure, the flavoring material may be in an amount of 10 wt% to 50 wt% in the flavored sheet.

According to an embodiment of the present disclosure, the flavored sheet may have a thickness of 1 millimeter (mm) or less.

According to an embodiment of the present disclosure, the cellulose may include at least one selected from a group consisting of methyl cellulose, ethyl cellulose, carboxymethyl cellulose, carboxyethyl cellulose, hydroxymethyl cellulose, hydroxyethyl cellulose, hydroxypropyl cellulose, hydroxypropylmethyl cellulose, hydroxyethylmethyl cellulose, and agar.

According to an embodiment of the present disclosure, the plasticizer may include at least one selected from a group consisting of propylene glycol, polyethylene glycol, dipropylene glycol, diethylene glycol, triethylene glycol, tetraethylene glycol, glycerin, and sorbitol.

According to an embodiment of the present disclosure, the flavored sheet may have a tensile strength of 1.0 kilogram-force (kgf)/15 mm or greater.

According to an embodiment of the present disclosure, the flavored sheet may further include one perforation line or two perforation lines formed therein.

According to an embodiment of the present disclosure, a smoking article including tipping paper according to the present disclosure is provided.

According to an embodiment of the present disclosure, the smoking article may be a cigarette or an electronic cigarette.

According to an embodiment of the present disclosure, the cigarette or the electronic cigarette may be in a form of a cigarette.

### Effects

In the present disclosure, a flavored sheet may be introduced into tipping paper, to provide an airflow cooling effect and a flavor expression effect, and thus it is possible to enhance persistence of a smoking taste and a tobacco taste. For example, since an aroma and/or flavor are expressed from an intermediate portion of a tobacco to a rear portion by tipping paper, the persistence of the smoking taste and the tobacco taste may be enhanced.

### Brief Description of Drawings

FIG. 1 illustrates an example of a smoking article to which tipping paper according to the present disclosure is applied, according to an embodiment of the present disclosure.
FIG. 2 illustrates another example of a smoking article to which tipping paper according to the present disclosure is applied, according to an embodiment of the present disclosure.

### Best Mode for Carrying Out the Invention

Hereinafter, embodiments of the present disclosure will be described in detail with reference to the accompanying drawings. When it is determined detailed description related to a related known function or configuration they may make the purpose of the present disclosure unnecessarily ambiguous in describing the present disclosure, the detailed description will be omitted here. In addition, terminologies used herein are defined to appropriately describe the embodiments and thus may be changed depending on a user, the intent of an operator, or a custom of a field to which the present disclosure pertains. Accordingly, the terminologies must be defined based on the following overall description of the present specification. In the drawings, like reference numerals are used for like elements.

In the whole specification, when one member is positioned "on" another member, this not only includes a case that the one member is brought into contact with the other member, but also includes a case that another member exists between two members.

It will be understood that when a certain part "includes" a certain component, the part does not exclude another component but may further include another component.

Hereinafter, tipping paper, and a smoking article including the tipping paper according to the present disclosure will be described in detail with reference to embodiments and drawings. However, the present disclosure is not limited to the embodiments and drawings.

The present disclosure relates to tipping paper. The tipping paper may be used for a smoking article may include a flavored sheet including a cellulose-based polymer, a plasticizer, and a flavoring material.

According to an embodiment of the present disclosure, the flavored sheet, which is a film-type sheet, may retain the flavoring material within the cellulose-based polymer to enhance persistence of a flavor and/or tobacco taste spread from a smoking article. In addition, the cellulose-based polymer may provide an airflow cooling effect due to a characteristic of a phase change (crystallization) only at a temperature (high temperature) of an airflow traveling to a smoker in the smoking article. In addition, due to a high tensile strength and flexibility of the flavored sheet, the flavored sheet itself may be applied as tipping base paper, that is, as a component of tipping paper, instead of being applied to tipping base paper.

According to an embodiment of the present disclosure, the "smoking article" may refer to any product that may be smoked or any product that may provide a smoking experience, regardless of whether the product is based on tobacco, tobacco derivatives, expanded tobacco, reconstituted tobacco, or tobacco substitutes. For example, the smoking article may refer to an article that may be smoked to generate an aerosol, such as a cigarette, a cigar, a cigarillo, an electronic cigarette (e.g., a heating-type cigarette), and the like. The smoking article may include an aerosol generating material, or an aerosol forming substrate. In addition, the smoking article may include a solid material based on raw tobacco materials, such as reconstituted tobacco sheets, cut tobacco leaves, reconstituted tobacco, and the like. A smoking material may include a volatile compound.

According to an embodiment of the present disclosure, the cellulose-based polymer may be a binder material while providing a polymer matrix for forming a sheet that is flexible, that has a high tensile strength and that is capable of retaining a flavoring material. In addition, for example, the cellulose-based polymer may be used together with ethyl alcohol and a solvent (e.g., water) used to dissolve and/or disperse ingredients for forming a film and/or a sheet. The cellulose-based polymer may include, for example, at least one selected from a group consisting of methyl cellulose, ethyl cellulose, carboxymethyl cellulose, carboxyethyl cellulose, hydroxymethyl cellulose, hydroxyethyl cellulose, hydroxypropyl cellulose, hydroxypropylmethyl cellulose, hydroxyethylmethyl cellulose, and agar, but is not limited thereto. Desirably, the cellulose-based polymer may be methyl cellulose and hydroxypropylmethyl cellulose.

According to an embodiment of the present disclosure, the cellulose-based polymer may be in an amount of 20% by weight (wt%) to 60 wt%; 20 wt% to 50 wt%; or 30 wt% to 40 wt% in the flavored sheet. If the amount of the cellulose-based polymer is less than 20 wt%, it may be difficult to obtain a tensile strength and flexibility that allow the cellulose-based polymer to be applied as tipping base paper, and difficult to generate a sheet itself. If the amount of the cellulose-based polymer exceeds 60 wt%, it may be difficult to enhance persistence of a smoking taste and a tobacco taste because an aroma and flavor are not sufficiently expressed from a flavoring material in a sheet due to a change (e.g., breaking, and cracking) in physical properties of the sheet.

According to an embodiment of the present disclosure, as the flavoring material, all materials capable of imparting flavor and/or aroma characteristics or enhancing an aromatic taste of smoking and applicable to a smoking article may be used without limitation. The flavoring material may include, for example, at least one selected from a group consisting of an organic acid, such as a lactic acid, a citric acid, a malic acid, and the like, licorice, sucrose, fructose syrup, isosweet, cocoa, lavender, cinnamon, cardamom, celery, fenugreek, cascarilla, white sandalwood, bergamot, geranium, honey essence, rose oil, vanilla, lemon oil, orange oil, mint oil, cinnamon, caraway, cognac, jasmine, chamomile, menthol, cassia, ylang-ylang, salvia, spearmint, ginger, cilantro, a clove extract (or a clove material), and coffee, but is not limited thereto.

According to an embodiment of the present disclosure, the flavoring material may be in an amount of 10 wt% to 50 wt%; 10 wt% to 40 wt%; 10 wt% to 30 wt%; or 10 wt% to 20 wt% in the flavored sheet. If the amount of the flavoring material is within the above range, persistence of a flavor and/or tobacco taste that spread may be provided and the flavoring material may be applied at a high concentration, to adjust an intensity of an aroma and/or flavor.

According to an embodiment of the present disclosure, the plasticizer may include at least one selected from a group consisting of propylene glycol, polyethylene glycol, dipropylene glycol, diethylene glycol, triethylene glycol, tetraethylene glycol, glycerin, and sorbitol, but is not limited thereto. Desirably, the plasticizer may be propylene glycol and glycerin.

According to an embodiment of the present disclosure, the plasticizer may be in an amount of 1 wt% to 20 wt%; 1 wt% to 15 wt%; 1 wt% to 10 wt%; or 5 wt% to 10 wt% in the flavored sheet, to adjust a strength of the flavored sheet. If the amount of the plasticizer is less than 1 wt%, it may be difficult to have a tensile strength suitable to apply the plasticizer as a component of tipping paper. If the amount of the plasticizer exceeds 20 wt%, a sheet may be easily torn due to poor physical properties of the sheet (e.g., a tensile strength may be reduced, or the sheet may be excessively softened), and it may be difficult to manufacture the sheet as tipping paper of a smoking article.

According to an embodiment of the present disclosure, the flavored sheet may have a thickness of 1 millimeter (mm) or less; 0.1 mm to 1 mm; or 0.5 mm to 0.8 mm. The flavored sheet may include a single layer or a plurality of layers. If the thickness of the flavored sheet exceeds 1 mm, it may be difficult to manufacture a sheet as tipping paper of a smoking article because a flexibility of the sheet is not properly implemented. Due to an increase in the thickness, a flavor and aroma may not be sufficiently expressed. If the flavored sheet is extremely thin, it may be difficult to obtain the cooling effect.

According to an embodiment of the present disclosure, the flavored sheet may further include one perforation line, or two or more perforation lines formed therein. For example, the two or more perforation lines may be spaced apart by a distance of 0.5 mm to 1.5 mm from each other. For example, a diameter of a perforation may be in a range of 0.02 mm to 0.08 mm (e.g., 0.05 mm), but is not limited thereto. Perforations may be arranged in a circumferential direction of the smoking article (for example, formed along an outer circumferential surface of tipping paper). The perforation lines may be formed using an on-line or off-line perforation method. In other words, perforations may be formed in the flavored sheet, and then the flavored sheet as tipping paper may be applied to the smoking article, or the tipping paper may be applied as a flavored sheet to the smoking article, and then perforations may be formed.

According to an embodiment of the present disclosure, the flavored sheet may have a tensile strength that allows the flavored sheet to be applied as tipping base paper of a smoking article. For example, the tensile strength of the flavored sheet may be 1.0 kilogram-force (kgf)/15 mm or greater; 2.0 kgf/15 mm or greater; 5.0 kgf/15 mm or greater; or in a range of 1.0 kgf/15 mm to 10 kgf/15 mm. If the tensile strength is within the above range, a flavored sheet with a properly balanced strength and flexibility to be applicable as tipping base paper of the smoking article may be obtained.

The present disclosure relates to a smoking article including tipping paper according to the present disclosure. According to an embodiment of the present disclosure, the tipping paper may provide a cooling effect and a flavor expression effect by applying a flavored sheet according to the present disclosure.

According to an embodiment of the present disclosure, the tipping paper may wrap at least a part of a filter portion or at least a portion of a corresponding region in the smoking article. For example, the tipping paper may wrap at least partial region corresponding to the filter portion of the smoking article in wrapping paper that directly wraps the filter portion or a last outer cover. For example, the filter portion may be a mono filter, a dual filter, or a triple filter. In addition, the filter portion may include a filter with at least one of a porous matrix structure, a tube structure, and a paper tube structure.

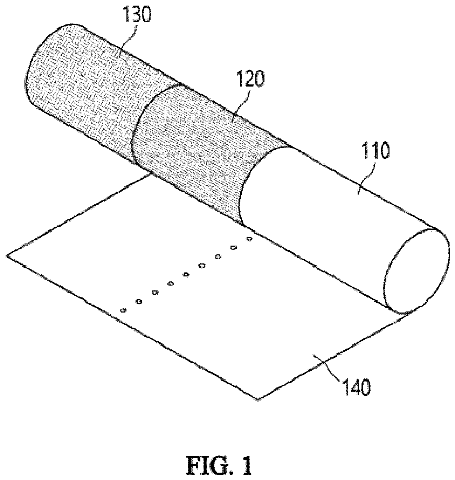

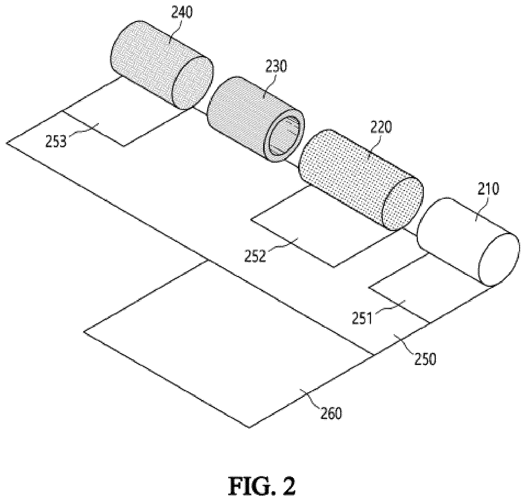

According to an embodiment of the present disclosure, referring to FIGS. 1 and 2, the smoking article may be a cigarette or an electronic cigarette, and may be in the form of a cigarette. Thus, by the flavored sheet, an airflow cooling effect may be obtained and an aroma and/or flavor may be expressed to enhance persistence of a smoking taste and a tobacco taste.

According to an embodiment of the present disclosure, referring to FIG. 1, a smoking article of FIG. 1 may be a tobacco stick including a first filter portion 110, a second filter portion 120, and a smoking material portion 130, and may include tipping paper 140 according to the present disclosure that wraps a region of the first filter portion 110 and the second filter portion 120.

According to an embodiment of the present disclosure, wrapping paper that individually or simultaneously wraps the first filter portion 110 and the second filter portion 120 may be further included, and the tipping paper 140 may wrap the wrapping paper. As the first filter portion 110, all filter configurations and/or materials applicable to a smoking product in the technical field of the present disclosure may be used without limitation. For example, the first filter portion 110 may include a filter tow including a fibrous form, a filamentous form, or both, but is not limited thereto. The fibrous form and the filamentous form may each include at least one of a polymer, paper, cellulose acetate, activated carbon, and carbon. In addition, the second filter portion 120 may include a tube structure or a paper tube structure, or may be a woven fabric filter. For example, the tube structure and the woven fabric filter may include a polymer material such as a polylactic acid (PLA), cellulose acetate (CA), poly(ethylene terephthalate) (PET), and the like, however, embodiments are not limited thereto.

According to an embodiment of the present disclosure, the first filter portion 110 and the second filter portion 120 may each have a length selected from a range of 5 mm to 20 mm; or a range of 10 mm to 15 mm, and the first filter portion 110 may have a length greater than that of the second filter portion 120. For example, the first filter portion 110 may have a length of 13 mm to 15 mm, and the second filter portion 120 may have a length of 10 mm to 12 mm.

According to an embodiment of the present disclosure, the tipping paper 140 may include the flavored sheet described above in association with the tipping paper according to the present disclosure. In an example of the present disclosure, the flavored sheet may include a cellulose-based polymer, a plasticizer, and a flavoring material.

According to an embodiment of the present disclosure, the cellulose-based polymer may provide a polymer matrix for forming a sheet that is flexible, that has a high tensile strength and that is capable of retaining a flavoring material, and may include, for example, at least one selected from a group consisting of methyl cellulose, ethyl cellulose, carboxymethyl cellulose, carboxyethyl cellulose, hydroxymethyl cellulose, hydroxyethyl cellulose, hydroxypropyl cellulose, hydroxypropylmethyl cellulose, hydroxyethylmethyl cellulose, and agar, but is not limited thereto. Desirably, the cellulose-based polymer may be methyl cellulose and hydroxypropylmethyl cellulose.

According to an embodiment of the present disclosure, the cellulose-based polymer may be in an amount of 20 wt% to 60 wt%; 20 wt% to 50 wt%; or 30 wt% to 40 wt% in the flavored sheet. If the amount of the cellulose-based polymer is less than 20 wt%, it may be difficult to obtain a tensile strength and flexibility that allow the cellulose-based polymer to be applied as tipping base paper, and difficult to generate a sheet itself. If the amount of the cellulose-based polymer exceeds 60 wt%, it may be difficult to enhance persistence of a smoking taste and a tobacco taste because an aroma and flavor are not sufficiently expressed from a flavoring material in a sheet due to a change (e.g., breaking, and cracking) in physical properties of the sheet.

According to an embodiment of the present disclosure, as the flavoring material, all materials capable of imparting flavor and/or aroma characteristics or enhancing an aromatic taste of smoking and applicable to a smoking article may be used without limitation. The flavoring material may include, for example, at least one selected from a group consisting of an organic acid, such as a lactic acid, a citric acid, a malic acid, and the like, licorice, sucrose, fructose syrup, isosweet, cocoa, lavender, cinnamon, cardamom, celery, fenugreek, cascarilla, white sandalwood, bergamot, geranium, honey essence, rose oil, vanilla, lemon oil, orange oil, mint oil, cinnamon, caraway, cognac, jasmine, chamomile, menthol, cassia, ylang-ylang, salvia, spearmint, ginger, cilantro, a clove extract (or a clove material), and coffee, but is not limited thereto.

According to an embodiment of the present disclosure, the flavoring material may be in an amount of 10 wt% to 50 wt%; 10 wt% to 40 wt%; 10 wt% to 30 wt%; or 10 wt% to 20 wt% in the flavored sheet. If the amount of the flavoring material is within the above range, persistence of a flavor and/or tobacco taste that spread may be provided and the flavoring material may be applied at a high concentration, to adjust an intensity of an aroma and/or flavor.

According to an embodiment of the present disclosure, the plasticizer may include at least one selected from a group consisting of propylene glycol, polyethylene glycol, dipropylene glycol, diethylene glycol, triethylene glycol, tetraethylene glycol, glycerin, and sorbitol, but is not limited thereto. Desirably, the plasticizer may be propylene glycol and glycerin.

According to an embodiment of the present disclosure, the plasticizer may be in an amount of 1 wt% to 20 wt%; 1 wt% to 15 wt%; 1 wt% to 10 wt%; or 5 wt% to 10 wt% in the flavored sheet, to adjust a strength of the flavored sheet. If the amount of the plasticizer is less than 1 wt%, it may be difficult to have a tensile strength suitable to apply the plasticizer as a component of tipping paper. If the amount of the plasticizer exceeds 20 wt%, a sheet may be easily torn due to poor physical properties of the sheet (e.g., a tensile strength may be reduced, or the sheet may be excessively softened), and it may be difficult to manufacture the sheet as tipping paper of a smoking article.

According to an embodiment of the present disclosure, the flavored sheet may have a thickness of 1 mm or less; 0.1 mm to 1 mm; or 0.5 mm to 0.8 mm. The flavored sheet may include a single layer or a plurality of layers. If the thickness of the flavored sheet exceeds 1 mm, it may be difficult to manufacture a sheet as tipping paper of a smoking article because a flexibility of the sheet is not properly implemented. Due to an increase in the thickness, a flavor and aroma may not be sufficiently expressed. If the flavored sheet is extremely thin, it may be difficult to obtain the cooling effect.

According to an embodiment of the present disclosure, the flavored sheet may further include one perforation line, or two or more perforation lines formed therein. For example, the two or more perforation lines may be spaced apart by a distance of 0.5 mm to 1.5 mm from each other. For example, a diameter of a perforation may be in a range of 0.02 mm to 0.08 mm (e.g., 0.05 mm), but is not limited thereto. Perforations may be arranged in a circumferential direction of the smoking article (for example, formed along an outer circumferential surface of tipping paper). The perforation lines may be formed using an on-line or off-line perforation method. In other words, perforations may be formed in the flavored sheet, and then the flavored sheet as tipping paper may be applied to the smoking article, or the tipping paper may be applied as a flavored sheet to the smoking article, and then perforations may be formed.

According to an embodiment of the present disclosure, the tipping paper 140 may have a length of 10 mm to 25 mm, and may have a length greater than that of the first filter portion 110 to wrap the first filter portion 110.

According to an embodiment of the present disclosure, the tipping paper 140 may have a tensile strength of 1.0 kgf/15 mm or greater; 2.0 kgf/15 mm or greater; 5.0 kgf/15 mm or greater; or a tensile strength of 1.0 kgf/15 mm to 10 kgf/15 mm. If the tensile strength is within the above range, tipping paper with a balanced strength and flexibility to apply to the smoking article may be provided.

According to an embodiment of the present disclosure, the tipping paper 140 may further include a perforation region formed therein within the length of the first filter portion 110, and the perforation region may be the same as that described in association with the flavored sheet. In other words, the perforations may be in one line or two or more lines and may be formed along an outer circumferential surface of the tipping paper 140. The perforations may adjust an amount of mainstream smoke constituents flowing from the smoking material portion 130 to the first filter portion 110 and implement an air dilution rate of a cigarette.

According to an embodiment of the present disclosure, the smoking material portion 130 may include raw tobacco materials, such as cut tobacco leaves, and the like, a smoking taste and aerosol forming substrate, and the like, and may be formed according to the type of smoking articles, which is not described in detail herein.

According to an embodiment of the present disclosure, the smoking material portion 130 may have a length of 15 mm to 75 mm.

According to an embodiment of the present disclosure, the smoking article may have a diameter of 4 mm to 10 mm and a circumference of 14 mm to 29 mm. In addition, the smoking article may have a length of 45 mm to 100 mm.

According to an embodiment of the present disclosure, referring to FIG. 2, a smoking article of FIG. 2 may be a stick of an electronic cigarette, and may include a first filter portion 210, a second filter portion 220, a third filter portion 230, a smoking material portion 240, and filter wrapping paper 251, 252, and 253 that wrap outer circumferences of the first filter portion 210, the second filter portion 220, and the smoking material portion 240, respectively, an outer cover 250, and tipping paper 260.

According to an embodiment of the present disclosure, as the first filter portion 210, all filter configurations and/or materials applicable to a smoking product in the technical field of the present disclosure may be used without limitation. For example, the first filter portion 210 may include a filter tow including a fibrous form, a filamentous form, or both, but is not limited thereto. The fibrous form and the filamentous form may each include at least one of a polymer, paper, cellulose acetate, activated carbon, and carbon.

According to an embodiment of the present disclosure, the second filter portion 220 and the third filter portion 230 may each be selected from a tube structure, a paper tube structure, and a woven fabric filter. For example, the second filter portion 220 may have a paper tube structure and may be a cooling portion that provides a cooling function, and the third filter portion 230 may have a tube structure. In addition, the tube structure and the woven fabric filter may include a polymer material such as a polylactic acid (PLA), cellulose acetate (CA), poly(ethylene terephthalate) (PET), and the like, however, embodiments are not limited thereto.

According to an embodiment of the present disclosure, the first filter portion 210, the second filter portion 220, the third filter portion 230 and the smoking material portion 240 may each have a length selected from a range of 10 mm to 20 mm; or a range of 10 mm to 15 mm. The third filter portion 230 may have a shortest length, and/or the second filter portion 220 may have a longest length. For example, the first filter portion 210 may have a length of 10 mm to 12 mm, the second filter portion 220 may have a length of 13 mm to 15 mm, the third filter portion 230 may have a length of 8 mm to 10 mm, and the smoking material portion 240 may have a length of 10 mm to 12 mm.

According to an embodiment of the present disclosure, the outer cover 250 may wrap all the first filter portion 210, the second filter portion 220, the third filter portion 230, and the smoking material portion 240, or wrap the filter wrapping paper 251, 252, and 253, and the tipping paper 260 may surround the outer cover 250, and may wrap a portion of the outer cover 250 corresponding to the first filter portion 210 and the second filter portion 220. As the outer cover 250 and the filter wrapping paper 251, 252, and 253, all paper applicable to a smoking article in the technical field of the present disclosure may be used without limitation, and for example, a polymer material, paper, cellulose acetate, and the like, may be used, however, embodiments are not limited thereto.

According to an embodiment of the present disclosure, the tipping paper 260 may include the flavored sheet described above in association with the tipping paper according to the present disclosure. In an example of the present disclosure, the flavored sheet may include a cellulose-based polymer, a plasticizer, and a flavoring material.

According to an embodiment of the present disclosure, the cellulose-based polymer may provide a polymer matrix for forming a sheet that is flexible, that has a high tensile strength and that is capable of retaining a flavoring material, and may include, for example, at least one selected from a group consisting of methyl cellulose, ethyl cellulose, carboxymethyl cellulose, carboxyethyl cellulose, hydroxymethyl cellulose, hydroxyethyl cellulose, hydroxypropyl cellulose, hydroxypropylmethyl cellulose, hydroxyethylmethyl cellulose, and agar, but is not limited thereto. Desirably, the cellulose-based polymer may be methyl cellulose and hydroxypropylmethyl cellulose.

According to an embodiment of the present disclosure, the cellulose-based polymer may be in an amount of 20 wt% to 60 wt%; 20 wt% to 50 wt%; or 30 wt% to 40 wt% in the flavored sheet. If the amount of the cellulose-based polymer is less than 20 wt%, it may be difficult to obtain a tensile strength and flexibility that allow the cellulose-based polymer to be applied as tipping base paper, and difficult to generate a sheet itself. If the amount of the cellulose-based polymer exceeds 60 wt%, it may be difficult to enhance persistence of a smoking taste and a tobacco taste because an aroma and flavor are not sufficiently expressed from a flavoring material in a sheet due to a change (e.g., breaking, and cracking) in physical properties of the sheet.

According to an embodiment of the present disclosure, as the flavoring material, all materials capable of imparting flavor and/or aroma characteristics or enhancing an aromatic taste of smoking and applicable to a smoking article may be used without limitation. The flavoring material may include, for example, at least one selected from a group consisting of an organic acid, such as a lactic acid, a citric acid, a malic acid, and the like, licorice, sucrose, fructose syrup, isosweet, cocoa, lavender, cinnamon, cardamom, celery, fenugreek, cascarilla, white sandalwood, bergamot, geranium, honey essence, rose oil, vanilla, lemon oil, orange oil, mint oil, cinnamon, caraway, cognac, jasmine, chamomile, menthol, cassia, ylang-ylang, salvia, spearmint, ginger, cilantro, a clove extract (or a clove material), and coffee, but is not limited thereto.

According to an embodiment of the present disclosure, the flavoring material may be in an amount of 10 wt% to 50 wt%; 10 wt% to 40 wt%; 10 wt% to 30 wt%; or 10 wt% to 20 wt% in the flavored sheet. If the amount of the flavoring material is within the above range, persistence of a flavor and/or tobacco taste that spread may be provided and the flavoring material may be applied at a high concentration, to adjust an intensity of an aroma and/or flavor.

According to an embodiment of the present disclosure, the plasticizer may include at least one selected from a group consisting of propylene glycol, polyethylene glycol, dipropylene glycol, diethylene glycol, triethylene glycol, tetraethylene glycol, glycerin, and sorbitol, but is not limited thereto. Desirably, the plasticizer may be propylene glycol and glycerin.

According to an embodiment of the present disclosure, the plasticizer may be in an amount of 1 wt% to 20 wt%; 1 wt% to 15 wt%; 1 wt% to 10 wt%; or 5 wt% to 10 wt% in the flavored sheet, to adjust a strength of the flavored sheet. If the amount of the plasticizer is less than 1 wt%, it may be difficult to have a tensile strength suitable to apply the plasticizer as a component of tipping paper. If the amount of the plasticizer exceeds 20 wt%, a sheet may be easily torn due to poor physical properties of the sheet (e.g., a tensile strength may be reduced, or the sheet may be excessively softened), and it may be difficult to manufacture the sheet as tipping paper of a smoking article.

According to an embodiment of the present disclosure, the flavored sheet may have a thickness of 1 mm or less; 0.1 mm to 1 mm; or 0.5 mm to 0.8 mm. The flavored sheet may include a single layer or a plurality of layers. If the thickness of the flavored sheet exceeds 1 mm, it may be difficult to manufacture a sheet as tipping paper of a smoking article because a flexibility of the sheet is not properly implemented. Due to an increase in the thickness, a flavor and aroma may not be sufficiently expressed. If the flavored sheet is extremely thin, it may be difficult to obtain the cooling effect.

According to an embodiment of the present disclosure, the flavored sheet may further include one perforation line, or two or more perforation lines formed therein. For example, the two or more perforation lines may be spaced apart by a distance of 0.5 mm to 1.5 mm from each other. For example, a diameter of a perforation may be in a range of 0.02 mm to 0.08 mm (e.g., 0.05 mm), but is not limited thereto. Perforations may be arranged in a circumferential direction of the smoking article (for example, formed along an outer circumferential surface of tipping paper). The perforation lines may be formed using an on-line or off-line perforation method. In other words, perforations may be formed in the flavored sheet, and then the flavored sheet as tipping paper may be applied to the smoking article, or the tipping paper may be applied as a flavored sheet to the smoking article, and then perforations may be formed.

According to an embodiment of the present disclosure, the tipping paper 260 may have a tensile strength of 1.0 kgf/15 mm or greater; 2.0 kgf/15 mm or greater; 5.0 kgf/15 mm or greater; or a tensile strength of 1.0 kgf/15 mm to 10 kgf/15 mm. If the tensile strength is within the above range, tipping paper with a balanced strength and flexibility to apply to the smoking article may be provided.

According to an embodiment of the present disclosure, the tipping paper 260 may further include a perforation region formed therein within a total length of the first filter portion 210 and the second filter portion 220, and the perforation region may be the same as that described in association with the flavored sheet. In other words, the perforations may be in one line or two or more lines and may be formed along an outer circumferential surface of the tipping paper 260. The perforations may adjust an amount of mainstream smoke constituents flowing from the smoking material portion 240 to the first filter portion 210 and/or implement an air dilution rate of a cigarette.

According to an embodiment of the present disclosure, the tipping paper 260 may have a length of 10 mm to 25 mm, and may have a length greater than that of the first filter portion 210 to wrap the first filter portion 210.

According to an embodiment of the present disclosure, the smoking material portion 240 may include raw tobacco materials, such as cut tobacco leaves, and the like, a smoking taste and aerosol forming substrate, and the like, and may be formed according to the type of smoking articles, which is not described in detail herein.

According to an embodiment of the present disclosure, the smoking article may have a diameter of 4 mm to 10 mm and a circumference of 14 mm to 29 mm. In addition, the smoking article may have a length of 45 mm to 100 mm.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if described components are combined in a different manner, and/or replaced or supplemented by other components or their equivalents. Therefore, other implementations, other embodiments, and equivalents to the claims are also within the scope of the following claims.

## Claims

1. Tipping paper for smoking articles, the tipping paper comprising:
a flavored sheet comprising a cellulose-based polymer, a plasticizer, and a flavoring material.

2. The tipping paper of claim 1, wherein the cellulose-based polymer is in an amount of 20% by weight (wt%) to 60 wt% in the flavored sheet.

3. The tipping paper of claim 1, wherein the plasticizer is in an amount of 1 wt% to 20 wt% in the flavored sheet.

4. The tipping paper of claim 1, wherein the flavoring material is in an amount of 10 wt% to 50 wt% in the flavored sheet.

5. The tipping paper of claim 1, wherein the flavored sheet has a thickness of 1 millimeter (mm) or less.

6. The tipping paper of claim 1, wherein the cellulose comprises at least one selected from a group consisting of methyl cellulose, ethyl cellulose, carboxymethyl cellulose, carboxyethyl cellulose, hydroxymethyl cellulose, hydroxyethyl cellulose, hydroxypropyl cellulose, hydroxypropylmethyl cellulose, hydroxyethylmethyl cellulose, and agar.

7. The tipping paper of claim 1, wherein the plasticizer comprises at least one selected from a group consisting of propylene glycol, polyethylene glycol, dipropylene glycol, diethylene glycol, triethylene glycol, tetraethylene glycol, glycerin, and sorbitol.

8. The tipping paper of claim 1, wherein the flavored sheet has a tensile strength of 1.0 kilogram-force (kgf)/15 mm or greater.

9. The tipping paper of claim 1, wherein the flavored sheet further comprises one perforation line or two perforation lines formed therein.

10. A smoking article comprising:
the tipping paper of claim 1.

11. The smoking article of claim 10, wherein the smoking article is a cigarette or an electronic cigarette, and is in a form of a cigarette.
